Europäisches Patentamt

European Patent Office

Office européen des brevets

(19)

(11) Numéro de publication: **0 371 885**
**A1**

## (12) DEMANDE DE BREVET EUROPEEN

(21) Numéro de dépôt: **89420431.2**

(22) Date de dépôt: **07.11.89**

(51) Int. Cl.⁵: **C01B 31/36**

(30) Priorité: **10.11.88 FR 8815179**

(43) Date de publication de la demande:
**06.06.90 Bulletin 90/23**

(84) Etats contractants désignés:
**DE GB IT**

(71) Demandeur: **PECHINEY ELECTROMETALLURGIE**
**Tour Manhattan La Défense 2 5/6 place de l'Iris**
**F-92400 Courbevoie(FR)**

(72) Inventeur: **Dubots, Dominique**
**65, rue des Alpes Passy-Chedde**
**F-74190 Le Fayet(FR)**
Inventeur: **Grindatto, Bernard**
**79, rue des Aravis Chedde**
**F-74190 Le Fayet(FR)**

(74) Mandataire: **Vanlaer, Marcel et al**
**PECHINEY 28, rue de Bonnel**
**F-69433 Lyon Cédex 3(FR)**

(54) **Procédé de production de carbure de silicium micronique.**

(57) L'invention concerne un procédé de production de poudre de carbure de silicium micronique α ou β, par réaction à température élevée entre une source de silicium et une source de carbone réactif à l'état pulvérulent. Selon ce procédé, on fait réagir le mélange de la source de silicium en poudre micronique et la source de carbone dans un four dont la zone de chauffage est à une température comprise entre 1500 et 2000°C, dans un courant gazeux composé d'au moins un constituant choisi parmi l'azote, l'hydrogène et le monoxyde de carbone.

La température du four dans la zone centrale de chauffage est comprise entre 1700 et 2000°C; la durée de séjour du mélange source de silicium-source de carbone dans cette zone est au moins égale à 30 minutes.

EP 0 371 885 A1

## PROCEDE DE PRODUCTION DE CARBURE DE SILICIUM MICRONIQUE

### DOMAINE TECHNIQUE DE L'INVENTION

L'invention concerne un procédé de production de carbure de silicium micronique $\alpha$ ou $\beta$, par reaction de carbone sur une source de silicium à température élevée, sous atmosphère contrôlée.

### ETAT DE LA TECHNIQUE

Les poudres microniques de carbure de silicium, déjà utilisées pour des polissages spéciaux et les céramiques, voient un nouveau débouché s'ouvrir dans le domaine des composites, et plus spécialement celui des dispersoïdes à base de particules de carbure de silicium dans une matrice métallique ou organique.

A l'heure actuelle, les poudres fines de carbure de silicium $\alpha$ sont obtenues par broyage du produit à cristallisation grossière, obtenu par réaction de carbone sur de l'oxyde de silicium (tel que du sable, du grès ou du quartz), en présence d'adjuvants éventuels, à une température supérieure à 2000°C, dans un four du type "ACHESON". Il existe également quelques autres méthodes, telles que la réaction d'un mélange d'hydrure de silicium $SiH_4$ et d'un hydrocarbure tel que l'éthylène $C_2H_4$, dans un faisceau laser au dioxyde de carbone, ou la réaction d'un mélange de silanes et de méthane dans un plasma.

### OBJET DE L'INVENTION

L'objet de l'invention est un procédé de production de poudre de carbure de silicium micronique consistant à faire réagir une source de silicium, choisie parmi le silicium métal et de dioxyde de silicium à l'état de poudre fine, avec une source de carbone réactif à l'état pulvérulent, dans un four dont la zone centrale de chauffage est à une température comprise entre 1500 et 2000°C sous un courant gazeux composé d'au moins un constituant choisi parmi l'azote, l'hydrogène et le monoxyde de carbone, en fonction de la source de carbone utilisée et de la morphologie souhaitée ($\alpha$ ou $\beta$) pour le carbure de silicium produit. Lorsque la source de silicium est du silicium métal, ce dernier doit être micronisé, c'est-à-dire broyé jusqu'à des dimensions pouvant se situer entre quelques micromètres et quelques dixièmes de micromètres, ou même moins; lorsque la source de silicium est de l'oxyde de silicium, on choisit de préférence une silice micronique ayant une surface spécifique comprise entre 1 et 500 m² par gramme.

Ce procédé peut être mis en oeuvre dans un four statique, ou de préférence, en continu dans un four à passage. De préférence, la température du four dans la zone centrale de chauffage est à une température comprise entre 1700 et 2000°C et la durée de séjour du mélange source de silicium carbone dans cette zone est au moins égale à 30 minutes.

Dans le cas de mélange silicium-carbone, on introduit le carbone en léger excès par rapport à la stoechiométrie de la réaction $Si + C \longrightarrow SiC$.

Dans le cas de mélanges silice-carbone, les proportions du mélange sont calculées sur la base de la réaction globale

$$SiO_2 + 3C \longrightarrow SiC + 2CO$$
$$60,1\ g + 36g \longrightarrow 40,1g + 56g$$

mais en utilisant une surstoechiométrie en carbone ou graphite, de manière à :
- favoriser la réaction totale, sachant qu'il est plus facile d'éliminer un excédent de carbone ou de graphite par oxydation à 600°C dans l'air que de la silice résiduelle
- éviter le frittage des particules de SiC
- réduire la croissance de ces particules de SiC.

Les silices qui peuvent être utilisées sont en général des poudres fines, dont la surface spécifique peut aller de 1 à 500 m²/g de préférence 10 à 200 m²/g; la présence d'impuretés abaissant le point de fusion ne peut être gênante que si celles-ci ne peuvent être éliminées que moyennant un traitement chimique supplémentaire du produit final.

Par exemple les métaux et composés alcalins sont en partie éliminés lors de la synthèse en milieu réducteur sous forme de vapeur. Par contre, les composés du fer restent présents de même que ceux de l'aluminium.

Ce dernier élément, susceptible de réagir avec le carbure de silicium formé, peut avoir des effets bénéfiques sur la mouillabilité de la poudre de SiC par les alliages liquides, propriété très utile pour la production de composites SiC - aluminium.

Par ailleurs, la présence de composés du bore dans certaines silices vitreuses peut conduire à la formation de poudres de SiC contenant du carbure de bore propre à modifier les propriétés de ces poudres sur le plan de la frittabilité (pour les céramiques) et sur le plan de l'utilisation dans les composites.

Selon que le mélange est constitué de carbone black ou de graphite micronisé, les conditions opératoires et les résultats sont différents.

L'utilisation du carbone black produit en général du carbure de silicium constitué de particules et de whiskers (trichites) et il s'avère que le contrôle de la morphologie est possible en jouant sur quatre paramètres de la réaction :

- l'atmosphère : le balayage des charges en cours de réaction par des gaz, tels que l'hydrogène, favorise l'obtention de particules (la même tendance est notée avec l'argon) par contre, l'introduction d'azote (même dilué dans l'hydrogène) oriente la croissance vers les whiskers, ainsi qu'on l'a indiqué dans notre demande de brevet français FR-A-2 611 694.

- la densité apparente du mélange qui contrairement au procédé de synthèse des whiskers peut être plus élevée, c'est-à-dire nettement supérieure à 0,20 g/cm³, alors que pour l'obtention de whiskers, elle doit rester comprise, de préférence, entre 0,20 et 0,30 g/cm³.

- la vitesse de montée en température de la charge réactionnelle peut être rapide : supérieure à 5°C/min - le niveau du palier doit être supérieur ou égal à 1700°C et d'au moi 30 min; une température trop élevée, supérieure à 2000°C favorise le grossissement des particules de SiC par un phénomène de recristallisation mettant en jeu des phases vapeurs qui n'existent en quantité appréciable qu'au-dessus de 2000°C; d'ailleurs la durée du palier est un moyen de contrôler les dimensions des particules constituant la poudre de carbure de silicium.

L'utilisation de graphite micronisé permet aussi l'obtention de particules de carbure de silicium α dont la forme et les dimensions sont voisines de celles du graphite de départ.

Avec cette source de carbone (graphite micronisé), l'obtention de particules n'est plus dépendante de l'atmosphère, c'est-à-dire que sous azote ou monoxyde de carbone, le produit obtenu reste particulaire, isomorphe aux particules de graphite employées.

## EXEMPLES DE MISE EN OEUVRE DE L'INVENTION

### EXEMPLE 1

Silice de départ : "Fume Silica" (provenant du dépoussiérage des fumées de fours électrométallurgiques produit du ferro-silicium et du silicium) -billes de silice amorphe, avec une teneur de 92 à 96% de SiO₂, une surface BET de 20 m²/g, un diamètre moyen de 0,7 μm, contenant diverses impuretés (Fe₂O₃, SiC, Si, AL₂O₃ CaO, MgO, Na₂O, K₂O, S).

Carbone black de départ : "Black Furnace" - surface BET 200 m²/g.

Proportions du mélange : 58% en poids de silice et 42% en poids de carbone black. Le mélange a été effectué dans un mélangeur à socs avec couteaux émotteurs. La densité apparente non tassée du mélange est de 0,30 g/cm³.

Mode de chargement : le mélange est placé dans des nacelles en graphite sur une épaisseur d'environ 5 cm.

Mode de cuisson : les nacelles contenant le mélange réactionnel sont introduites en continu dans un four tunnel travaillant sous balayage d'hydrogène et chauffé par des résistors en molybdène, les réfractaires étant du type "alumineux".

Les produits sont montés de 1300°C à 1700°C à raison de 5°C/min et maintenus en palier à 1700°C durant 30 min, puis passent dans la zone de refroidissement du four.

Après oxydation du carbone excédentaire par chauffage à l'air (600°C, env. 120 mm), on obtient une poudre de carbure de silicium dont le BET (surface spécifique) est d'environ 10 m²/g et dont l'examen au microscope révèle qu'il s'agit de particules (et non de whiskers), ayant des dimensions inférieures à 10 μm et de diamètre moyen 3 μm.

Un deuxième essai réalisé avec un mélange des mêmes composants dans des proportions identiques mais de densité apparente plus faible (0,18 g/cm³) (car effectué dans un mélangeur hélicoïdal) et placé dans le même four (mais cette fois sous balayage d'un mélange de gaz constitué de 90% volume d'hydrogène et de 10% volume d'azote) a fourni des produits contenant une proportion non négligeable (env. 20 % volume de whiskers de carbure de silicium).

### EXEMPLE 2

Un mélange intime de poussières de silice identiques à celles de l'exemple 1 et de graphite micronisé (< 20 μm) dans les proportions de l'exemple 1 est placé dans un four Tamman fonctionnant sous balayage d'azote. Le mélange est porté à 1900°C durant 2 heures.

Après extraction des produits de la réaction et oxydation du graphite excédentaire à 600°C, la poudre verte obtenue se révèle être du carbure de silicium β se présentant sous forme de particules de morphologie quasiment identique à celle du graphite micronisé de départ.

### EXEMPLE 3

Une variante de l'invention permet aussi de produire du carbure de silicium par synthèse directe.

Cette variante qui constitue une troisième méthode permet de synthétiser des particules de car-

bure de silicium $\beta$. Elle consiste à chauffer jusqu'à 1500°C sous atmosphère non oxydante et non nitrurante, et de préférence sous hydrogène, un mélange intime de silicium micronisé et de carbone black. Le produit obtenu est constitué de particules de carbure de silicium $\beta$ dont les dimensions sont du même ordre de grandeur que celles de poudre de silicium micronique de départ.

On sait que du carbure de silicium $\beta$ qui cristallise dans le système cubique -alors que l'$\alpha$ est hexagonal- est souvent ajouté au carbure de silicium destiné au frittage, car il favorise le frittage, par un mécanisme encore mal connu.

La mise en oeuvre de l'invention permet donc, par une sélection des matières de base et de l'atmosphère, de produire à volonté du SiC micronique $\alpha$ ou $\beta$ particulièrement apte au frittage et à l'incorporation dans des matrices métalliques ou organiques.

## Revendications

1. Procédé de production de poudre de carbure de silicium micronique $\alpha$ ou $\beta$, par réaction à température élevée entre une source de silicium et une source de carbone réactif à l'état pulvérulent caractérisé en ce que l'on fait réagir le mélange de la source de silicium en poudre micronique et la source de carbone dans un four dont la zone de chauffage est à une température comprise entre 1500 et 2000°C, dans un courant gazeux composé d'au moins un constituant choisi parmi l'azote, l'hydrogène et le monoxyde de carbone.

2. Procédé selon revendication 1, caractérisé en ce que la température du four dans la zone centrale de chauffage est comprise entre 1700 et 2000°C et en ce que la durée de séjour du mélange source de silicium-source de carbone dans cette zone est au moins égale à 30 minutes.

3. Procédé selon revendication 1 ou 2, caractérisé en ce que la source de carbone est du carbon black ayant une surface spécifique BET au moins égale à 100 m²/gramme et l'atmosphère du four est constituée par de l'hydrogène pur.

4. Procédé selon revendication 1 ou 2, caractérisé en ce que la source de carbone est du graphite micronisé et l'atmosphère du four est constituée par un gaz réducteur choisi parmi l'hydrogène et l'oxyde de carbone.

5. Procédé selon revendication 1 ou 2 caractérisé en ce que, pour produire du carbure de silicium $\alpha$, la source de silicium est de l'oxyde de silicium ayant une surface spécifique comprise entre 1 et 500 m² par gramme, mélangé avec la source de carbone dans une proportion surstoéchiométrique en carbone par rapport à la réaction :
$$SiO_2 + 3C \longrightarrow SiC + 2 CO.$$

6. Procédé selon revendication 1 ou 2 caractérisé en ce que, pour produire du silicium $\beta$, la source de silicium est du silicium métal en poudre micronique, mélangé avec la source de carbone, dans une proportion surstoéchiométrique en carbone par rapport à la reaction :
$$Si + C \longrightarrow SiC$$
l'atmosphère du four étant constituée par un gaz non oxydant et non nitrurant, et de préférence par de l'hydrogène.

7. Procédé selon l'une quelconque des revendications 1 à 6, caractérisé en ce que l'on opère en four statique.

8. Procédé selon l'une quelconque des revendications 1 à 6, caractérisé en ce que l'on opère en continu dans un four à passage.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN vol. 12, no. 410 (C-540)(3257), 28 octobre 1988; & JP - A - 63 147 811 (KAWASAKI STEEL CORP.) 20.06.1988 --- | 1 | C 01 B 31/36 |
| A | PATENT ABSTRACTS OF JAPAN vol. 8, no. 134 (C-230)(1571), 21 juin 1984; & JP - A - 59 45 915 (TOKYO SHIBAURA DENKI K.K.) 15.03.1984 --- | 1 | |
| A | PATENT ABSTRACTS OF JAPAN vol. 11, no. 357 (C-458)(2804), 20 novembre 1987, & JP - A - 62 128 913 (KAWASAKI STEEL CORP.) 11.06.1987 --- | 1 | |
| A | FR-A-1 395 946 (PITTSBURGH PLATE GLASS) * exemple 1; page 3, colonne de gauche, lignes 32-41 * --- | 1 | |
| A | US-A-4 327 066 (M. SEIMIYA) * colonne 1, lignes 36-62 * ----- | 1 | **DOMAINES TECHNIQUES RECHERCHES (Int. Cl.5)** C 01 B 31/36 C 30 B 25/00 C 30 B 29/36 |

Le présent rapport a été établi pour toutes les revendications

| Lieu de la recherche | Date d'achèvement de la recherche | Examinateur |
|---|---|---|
| BERLIN | 01-02-1990 | CLEMENT J.P. |